# EUROPÄISCHE PATENTSCHRIFT

(11) **EP 2 459 109 B1**
(45) Veröffentlichungstag und Bekanntmachung des Hinweises auf die Patenterteilung: **10.09.2014**
(21) Anmeldenummer: 10718878.1
(22) Anmeldetag: 23.04.2010
(51) Int. Cl.: A61C 17/06, B01D 21/00

(54) **ABSCHEIDER ZUM ABSCHEIDEN VON AMALGAM**
SEPARATOR FOR SEPARATING AMALGAM
SÉPARATEUR POUR SÉPARER DE L'AMALGAME

(30) Priorität: 31.07.2009 DE 202009010357 U
(43) Veröffentlichungstag der Anmeldung: 06.06.2012
(73) Patentinhaber: Pregenzer, Bruno, 6411 Mieming (AT); Konzett, Alfred, 6082 Patsch (AT)
(72) Erfinder: Pregenzer, Bruno, 6411 Mieming (AT); Konzett, Alfred, 6082 Patsch (AT)
(74) Vertreter: Laufhütte, Dieter
(86) Internationale Anmeldenummer: PCT/EP2010/002529
(87) Internationale Veröffentlichungsnummer: WO 2011/012180

(56) Entgegenhaltungen:
- WO-A1-98/46324
- DE-A1- 3 813 264
- US-A1- 2006 030 476
- US-A1- 2008 099 390

## Beschreibung

Die Erfindung betrifft einen Abscheider zum Abscheiden von Amalgam.

Amalgame und insbesondere Dentalamalgame sind Metallverbindungen aus Quecksilber, Kupfer, Zink und Silber. Amalgame werden seit langen Jahren aufgrund ihrer guten physikalischen Eigenschaften im Dentalbereich zur Herstellung von Zahnfüllungen verwendet. Beim Entfernen der Füllungen während der zahnärztlichen Behandlung entstehen Amalgamabfälle. Diese werden während der Behandlung zusammen mit Speichel und dem Spülwasser abgesaugt und dem Abwassersystem in der Zahnarztpraxis zugeführt. Da es sich bei den Amalgamresten, wie zuvor ausgeführt, um Schwermetall handelt, müssen diese vor Einleiten des Abwassers in das Kanalsystem vollständig abgeschieden werden.

Zur Abscheidung der Amalgampartikeln aus dem zahnärztlichen Abwasser ist es bekannt, Zentrifugen zu verwenden. Derartige Zentrifugalabscheider sind jedoch aufwendige Apparate, die vergleichsweise teuer und wartungsintensiv sind.

Alternativ hierzu sind bereits auch Filter zur Abscheidung bekannt, mit denen der abzutrennende Feststoff aus dem Abwasser abgefiltert wird.

Schließlich sind auch Sedimentationsabscheider bekannt, bei denen der Dichteunterschied zwischen den vergleichsweise schweren Amalgampartikeln und der Flüssigkeit ausgenutzt wird. Die Betriebsparameter in einem Sedimentationsabscheider sind so zu wählen, dass die abzuscheidenden schwereren Partikel während der Durchströmung des Abscheiders bis auf die Sedimentationsfläche absinken können.

Aus der DE 103 33 884 B4 ist ein Abscheider zum Abscheiden von Amalgam im zahnärztlichen Abwassergemisch bekannt, in dem ein Gehäuse mit einer Öffnung für die Abwasserzuführung und eine Öffnung für die Abwasserabführung vorhanden ist und in dem in einem Gehäuse ein Abscheidemittel durchströmbar angeordnet ist, um das Amalgam aus dem zahnärztlichen Abwassergemisch abzuscheiden. Das Abscheidemittel wird hier durch einen durchströmbaren Formkörper ausgebildet, der aus einer, in mehreren Lagen liegenden Strukturfolie besteht. Diese Strukturfolie weist in der Regel geometrisch gleichförmige Strukturen auf, wie beispielsweise Dreieckstrukturen, Viereckstrukturen oder Trapezstrukturen. Die Herstellung derartiger Strukturen ist vergleichsweise aufwendig.

Die WO-A-98 46 324 beschreibt Abscheider zum Abscheiden von Amalgam aus einem zahnärztlichen Abwassergemisch. Er weist ein Gehäuse mit einer Öffnung für die Abwasserzuführung und einer Öffnung zur Abwasserabführung auf. Im Gehäuse ist durchströmbar ein Abscheidemittel zum Abscheiden des Amalgam aus dem zahnärztlichen Abwassergemisch angeordnet. Das Abscheidemittel besteht aus mehreren übereinander geschichteten Lagen eines Trägermaterials, zwischen denen Kunststoffgranulatkörner angeordnet sind.

Der Erfindung liegt die Aufgabe zugrunde, ein Vorrichtung zur Amalgamabscheidung bereitzustellen, bei der das Abscheidemittel in sehr einfacher Art und Weise herstellbar ist, wobei mit dem Abscheidemittel eine gute Amalgamabscheidung erreicht werden kann.

Erfindungsgemäß wird diese Aufgabe durch die Kombination der Merkmale des Anspruchs 1 gelöst.

Demnach wird ein Abscheider zum Abscheiden von Amalgam aus einem zahnärztlichen Abwassergemisch, mit einem Gehäuse mit einer Öffnung für die Abwasserzuführung und einer Öffnung zur Abwasserabführung und mit einem in dem Gehäuse durchströmbar angeordneten Abscheidemittel zum Abscheiden des Amalgam aus dem zahnärztlichen Abwassergemisch bereitgestellt, bei dem das Abscheidemittel aus mehreren übereinander geschichteten Lagen eines Trägermaterials und zwischen diesen Lagen angeordnetem stückigen Material besteht. Das stückige Material besteht aus Flocken bzw. Spänen aus Metall. Das Trägermaterial ist derart gewickelt, dass das stückige Material zwischen den Wickellagen des Trägermaterials verteilt angeordnet ist. Untersuchungen haben ergeben, dass mittels diesem sehr einfach herstellbaren Abscheidemittel eine sehr gute Trennung der Amalgampartikeln aus dem zahnärztlichen Abwassergemisch ermöglicht werden.

Bevorzugte Ausgestaltungen der Erfindung ergeben sich aus den sich an den unabhängigen Patentanspruch 1 anschließenden abhängigen Ansprüchen.

Vorteilhaft weist das Gehäuse zumindest eine Kammer zur Aufnahme des Abscheidemittels auf.

Die Kammer kann im Querschnitt vorteilhaft kreisförmig, oval oder mehreckig sein.

Zur gleichmäßigen Verteilung des zu reinigenden zahnärztlichen Abwassergemisches ist es besonders vorteilhaft, wenn die mindestens eine Kammer zur Aufnahme des Abscheidemittels jeweils im Einlaufbereich Verteilungsmittel zur gleichmäßigen Verteilung des Abwassergemischs aufweist. Dieses Verteilungsmittel kann beispielsweise ein Lochblech sein.

Zur Einstellung einer gleichmäßigen laminaren Strömung ist es besonders vorteilhaft, wenn vor der Kammer, in der das Abscheidemittel aufgenommen ist, noch eine Eintrittskammer gebildet ist. Ganz besonders vorteilhaft ist auch zusätzlich noch eine Austrittskammer vorhanden.

Das Trägermaterial besteht gemäß einer vorteilhaften Ausgestaltung der Erfindung aus einem flächigen durchströmbaren Material, vorteilhaft einem Vlies, einem Gewebe, einem Netz, einem Gewirk, einem Geflecht oder ähnlichem.

Besonders vorteilhaft besteht das stückige Material aus Zinkspänen.

Das stückige Material kann über eine Klebeschicht auf dem Trägermaterial zusätzlich fixiert sein.

Besonders vorteilhaft besteht das gesamte Gehäuse aus Kunststoff.

Weitere Merkmale, Einzelheiten und Vorteile der Erfindung werden anhand eines in der Zeichnung dargestellten Ausführungsbeispiels näher erläutert. Es zeigen:
- Figur 1:: eine perspektivische Darstellung einer Ausführungsvariante des erfindungsgemäßen Abscheiders, teilweise aufgeschnitten und ohne eingesetzten Abscheidemittel und
- Figur 2:: eine perspektivische Darstellung einer Ausführungsvariante des Abscheidemittels gemäß der vorliegenden Erfindung.

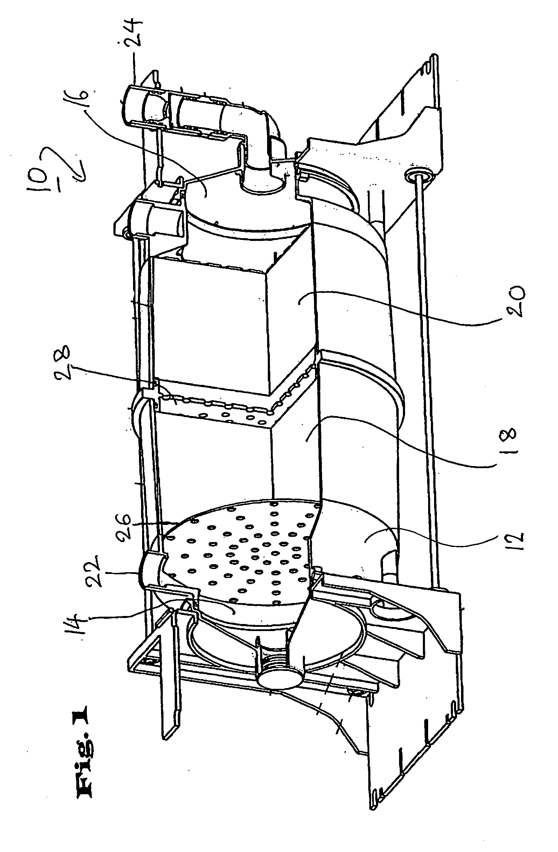

In der Figur 1 ist schematisch der Abscheider 10 dargestellt. Dieser weist ein Gehäuse 12 auf, in welchem eine Eintrittskammer 14 und eine Austrittskammer 16 sowie zwei Kammern 18 und 20 zur Aufnahme des in der Figur 1 nicht näher dargestellten Abscheidemittels angeordnet sind.

Das Gehäuse 12 weist vor der Einlaufkammer 14 eine Öffnung zur Abwasserzuführung 22 und anschließend an die Austrittskammer 16 eine Öffnung zur Abwasserabführung 24 auf.

Vor den jeweiligen Kammern zur Aufnahme der Abscheidemittel 18 und 20 sind Lochbleche 26 und 28 eingesetzt. Diese dienen zur Vergleichmäßigung des einströmenden zu reinigenden zahnärztlichen Abwassergemisches. Die Löcher der Lochbleche 26 sind so groß gewählt, dass die Amalgampartikel sicher hindurchtreten können. Diese scheiden sich dann in dem in den Kammern 18 und 20 angeordneten Abscheidemitteln ab.

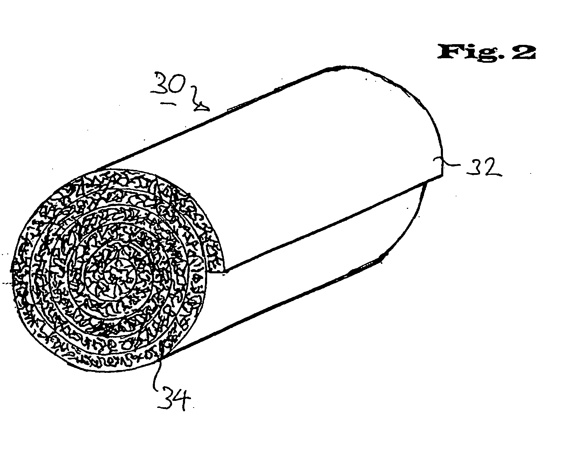

In Figur 2 ist beispielhaft ein Abscheidemittel 30 gezeigt. Dieses besteht aus geschichteten Lagen eines Trägermaterial 32 und zwischen diesen angeordnetem stückigen Material 34. Die Art und Weise, in der das Trägermaterial in Schichten übereinandergelegt wird, ist beliebig. Im hier dargestellten Ausführungsbeispiel nach Figur 2 sind die Lagen gewickelt. Es können hier aber auch einzelne Lagen aufeinander gestapelt werden oder mäanderförmig aufeinander gelegt werden. Jede andere Art von Schichtung ist ebenfalls möglich. Wesentlich ist, dass zwischen den einzelnen Lagen des Trägermaterials 32 das stückige Material möglichst gleichmäßig verteilt angeordnet ist.

Im hier dargestellten Ausführungsbeispiel gemäß der Figuren 1 und 2 sind die Kammern 18 und 20 im Gehäuse 12 zylindrisch ausgebildet. Demzufolge sind auch die Abscheidemittel, wie in Figur 2 dargestellt, zylindrisch ausgeführt. Die jeweiligen Durchmesser dieser Abscheidemittelzylinder entsprechen dem Innendurchmesser der zylinderförmigen Kammern 18 und 20. Auch die Länge der Abscheidemittelzylinder ist an die Länge der Kammern 18 und 20 angepaßt.

Abweichend von dem hier dargestellten Ausführungsbeispiel kann natürlich auch eine andere Form für das Gehäuse bzw. das Abscheidemittel gewählt werden. So kann der Querschnitt des Gehäuses auch eckig, beispielsweise rechteckig ausgeführt sein. Dort könnte das Abscheidemittel auch aus mäanderförmig übereinander geschichteten Lagen des Trägermaterials und zwischen diesen angeordnetem stückigen Material bestehen. Zwischen den einzelnen Kammern, in denen die Abscheidemittel aufgenommen werden, könnten auch noch Zwischenkammern ohne Abscheidemittel enthalten sein. Das Gehäuse 12 kann wie in Figur 1 dargestellt, langgestreckt sein, es kann aber auch beispielsweise hufeisenförmig gebildet sein oder eine andere Form aufweisen.

Das Trägermaterial 32 besteht grundsätzlich aus einem flächig durchströmbaren Material, das vorteilhaft ein Vlies oder ein Gewebe, ein Gewirk, ein Netz, ein Geflecht oder ähnliches ist. Besonders vorteilhaft besteht es aus einem Vlies aus Recyclingmaterial. Das zwischen den Lagen des Trägermaterials 32 aufgenommene stückige Material besteht vorteilhaft aus Flocken bzw. Spänen aus Metall, Kunststoff und/oder Holz. Hier können jederzeit auch Stoffgemische eingesetzt werden.

Ganz besonders vorteilhaft hat sich für das Erreichen eines besonders hohen Abscheidegrads der Einsatz von stückigem Material aus Zinkspänen erwiesen.

Zur gleichmäßigen Verteilung und Fixierung des stückigen Materials zwischen dem Trägermaterial ist es von besonderem Vorteil, wenn das stückige Material über eine Klebeschicht auf dem Trägermaterial zumindest einseitig fixiert ist. Diese Klebeschicht kann beispielsweise durch einen herkömmlichen Sprühkleber gebildet werden.

Im folgenden werden einige experimentelle Vergleichsversuche wiedergegeben:

### 1. Vergleichsversuch:

Beim ersten Versuch wurde ein Abscheidemittel mit einem PES-Vlies mit 160 g/m² Flächengewicht als Trägermaterial gewählt. Auf dieses wurden einseitig Zinkspäne aufgegeben. Das Trägermaterial wurde zu einem Wickel entsprechend Figur 2 gedreht und in eine Vorrichtung entsprechend Figur 1 eingesetzt. Es waren zwei Kammern vorhanden und es sind die jeweiligen Lochbleche mit Lochdurchmessern von 5 mm vorgesehen. Die Gesamtlänge des Abscheidemittels betrug 2 x 2200 mm und das Gewicht des Filtermaterials betrug 2 x 430 g. Der Durchmesser des Gehäuses betrug 125 mm. Das Volumen des Abscheidebehälters insgesamt betrug 2000 ml. Die Länge der Sedimentationsstrecke betrug 200 mm. Der Abscheider wurde horizontal angeordnet. Der maximale Durchfluß, das heißt der maximale Volumenstrom betrug 10,8 l/min. Als Prüfprobe wurde eine 3g Kupferprobe verwendet, wobei die Versuche mit einem Durchfluß, das heißt einem Volumenstrom von 5,0 l/min durchgeführt wurden. Dabei betrug die Prüfdauer 2 Minuten und die Nachspüldauer mit dem 5-fachen Volumen des Abscheidebehälters, das heißt mit 10 l, betrug ebenfalls 2 Minuten. Bei diesem Versuch konnte eine Abscheidung von 98,8% erreicht werden.

### 2. Vergleichsversuch:

Hier wurde im wesentlichen der gleiche Aufbau gewählt wie im ersten Vergleichsversuch . Insbesondere das Abscheidemittel wurde in gleicher Weise aufgebaut. Im Unterschied zu dem zuvor genannten Beispiel ist das Volumen des Abscheidebehälters hier kleiner. Es beträgt lediglich 800 ml. Der maximale Durchfluß beträgt 7,3 l/min. Aufgrund der kleineren Abmessung wird auch der Volumenstrom auf 1,0 l/min reduziert. Die Prüfdauer betrug hier 2 Minuten, während die Nachspüldauer mit einem 5-fachen Nachspülvolumen des Abscheidebehälters, das heißt 4 l, 4 Minuten dauerte. Mit dieser Konfiguration konnte ein Abscheidegrad von 98,6% erreicht werden.

## Patentansprüche

1. Abscheider (10) zum Abscheiden von Amalgam aus einem zahnärztlichen Abwassergemisch, mit einem Gehäuse (12) mit einer Öffnung für die
Abwasserzuführung und einer Öffnung zur Abwasserabführung und mit einem in dem Gehäuse (12) durchströmbar angeordneten Abscheidemittel (30) zum Abscheiden des Amalgam aus dem zahnärztlichen Abwassergemisch, wobei
das Abscheidemittel (30) aus mehreren übereinander geschichteten Lagen
eines Tragermaterials (32) und zwischen diesen angeordnetem stückigen Material (34) besteht, **dadurch gekennzeichnet, dass** das stückige Material (34) aus Flocken bzw. Spänen aus Metall besteht, und dass das Trägermaterial (32) derart gewickelt ist, dass das stückige Material (34) zwischen den Wickellagen des Trägermaterials (32) verteilt angeordnet ist.

2. Abscheider (10) nach Anspruch 1, **dadurch**
**gekennzeichnet, dass** das Gehäuse (12) zümindest eine Kammer (18, 20) zur Aufnahme des Abscheidemittels (30) aufweist.

3. Abscheider (10) nach einem der vorhergehenden Ansprüche, **dadurch gekennzeichnet, dass** die Kammer (15, 20) im Querschnitt kreisförmig, oval oder mehreckig ist.

4. Abscheider (10) nach Anspruch 2 oder 3, **dadurch gekennzeichnet, dass** die mindestens eine Kammer (18, 20) zur Aufnahme des Abscheidemittels jeweils im Einlauf Verteilungsmittel (26, 28) zur gleichmäßigen Verteilung des Abwassergemischs aufweist.

5. Abscheider (10) nach Anspruch 4, **dadurch gekennzeichnet, dass** das Verteilungsmittel (26, 28) jeweils ein Lochblech ist.

6. Abscheider (10) nach einem der vorhergehenden Ansprüche, **dadurch**
**gekennzeichnet, dass** jeweils eine Eintrittskammer (14) und/oder eine Austrittskammer (16) vorhanden sind.

7. Abscheider (10) nach dem vorhergehenden Anspruch, **dadurch gekennzeichnet, dass** das Trägermaterial (32) aus einem flächigen durchströmbaren Material, vorteilhaft einem Vlies, einem Gewebe oder ähnlichem besteht.

8. Abscheider (10) nach einem der vorhergehenden Ansprüche, **dadurch gekennzeichnet, dass** das stückige Material (34) aus Zinkspänen besteht.

9. Abscheider (10) nach einem der vorhergehenden Ansprüche, **dadurch gekennzeichnet, dass** das stückige Material (34) über eine Klebeschicht auf dem Trägermaterial (32) fixiert ist.

10. Abscheider (10) nach einem der vorhergehenden Ansprüche, **dadurch gekennzeichnet, dass** das Gehäuse (12) aus Kunststoff besteht.

## Claims

1. A separator (10) for separating amalgam from a dental waste water mixture, comprising a housing (12) with an opening for the waste water supply and an opening for the waste water discharge, and comprising a separating means (30) arranged in the housing (12) in a manner to be flown through for separating the amalgam from the dental waste water mixture, wherein the separating means (30) consists of a plurality of superimposed layers of a carrier material (32) and of lumpy material (34) arranged between the same, **characterized in that** the lumpy material (34) consists of flakes or chips of metal and that the carrier material (32) is wound such that the lumpy material (34) is distributed between the winding layers of the carrier material (32).

2. The separator (10) according to claim 1, **characterized in that** the housing (12) includes at least one chamber (18, 20) for receiving the separating means (30).

3. The separator (10) according to any of the preceding claims, **characterized in that** the chamber (18, 20) is circular, oval or polygonal in cross-section.

4. The separator (10) according to claim 2 or 3, **characterized in that** the at least one chamber (18, 20) for receiving the separating means each includes distributing means (26, 28) in the inlet for uniformly distributing the waste water mixture.

5. The separator (10) according to claim 4, **characterized in that** the distributing means (26, 28) each is a perforated plate.

6. The separator (10) according to any of the preceding claims, **characterized in that** there is each provided an inlet chamber (14) and/or an outlet chamber (16).

7. The separator (10) according to the preceding claim, **characterized in that** the carrier material consists (32) of a flat material to be flown through, advantageously of a fleece, a woven fabric or the like.

8. The separator (10) according to any of the preceding claims, **characterized in that** the lumpy material (34) consists of zinc chips.

9. The separator (10) according to any of the preceding claims, **characterized in that** the lumpy material (34) is fixed on the carrier material (32) by an adhesive layer.

10. The separator (10) according to any of the preceding claims, **characterized in that** the housing (12) is made of plastics.

## Revendications

1. Séparateur (10) permettant de séparer un amalgame constitué d'un mélange d'effluents dentaires, comportant un carter (12) muni d'une ouverture pour l'admission des effluents et d'une ouverture pour l'évacuation des effluents et comportant un moyen de séparation (30), disposé dans le carter (12) de manière à être traversé par le flux et destiné à séparer l'amalgame constitué du mélange d'effluents dentaires, ledit moyen de séparation (30) étant formé par plusieurs couches d'un matériau de support (32) empilées les unes sur les autres et d'un matériau en morceaux (34) disposé entre celles-ci, **caractérisé en ce que** le matériau en morceaux (34) est constitué de flocons ou copeaux de métal, et **en ce que** le matériau de support (32) est enroulé de telle sorte que le matériau en morceaux (34) est réparti entre les couches enroulées du matériau de support (32).

2. Séparateur (10) selon la revendication 1, **caractérisé en ce que** le carter (12) comporte au moins une chambre (18, 20) destinée à recevoir le moyen de séparation (30).

3. Séparateur (10) selon l'une quelconque des revendications précédentes, **caractérisé en ce que** la chambre (18, 20) est circulaire, ovale ou polygonale dans sa section transversale.

4. Séparateur (10) selon la revendication 2 ou 3, **caractérisé en ce que** ladite au moins une chambre (18, 20) destinée à recevoir le moyen de séparation comporte dans chaque cas, dans l'entrée, des moyens de répartition (26, 28) pour une répartition régulière du mélange d'effluents.

5. Séparateur (10) selon la revendication 4, **caractérisé en ce que** le moyen de répartition (26, 28) est dans chaque cas une plaque perforée.

6. Séparateur (10) selon l'une quelconque des revendications précédentes, **caractérisé en ce que** respectivement une chambre d'entrée (14) et/ou une chambre de sortie (16) sont disponibles.

7. Séparateur (10) selon la revendication précédente, **caractérisé en ce que** le matériau de support (32) est formé par un matériau plat apte à être traversé par le flux, de manière avantageuse un non-tissé, un tissu ou similaire.

8. Séparateur (10) selon l'une quelconque des revendications précédentes, **caractérisé en ce que** le matériau en morceaux (34) est constitué par des copeaux de zinc.

9. Séparateur (10) selon l'une quelconque des revendications précédentes, **caractérisé en ce que** le matériau en morceaux (34) est fixé sur le matériau de support (32) au moyen d'une couche adhésive.

10. Séparateur (10) selon l'une quelconque des revendications précédentes, **caractérisé en ce que** le carter (12) est réalisé en matière plastique.
